# EUROPÄISCHE PATENTSCHRIFT

(11) **EP 2 991 844 B1**
(45) Veröffentlichungstag und Bekanntmachung des Hinweises auf die Patenterteilung: **25.01.2017**
(21) Anmeldenummer: 14709593.9
(22) Anmeldetag: 04.03.2014
(51) Int. Cl.: B60G 3/28

(54) **EINZELRADAUFHÄNGUNG EINES FAHRZEUGS MIT EINER IN FASERVERBUNDWERKSTOFF AUSGEFÜHRTEN FEDER-LENKER-STRUKTUR**
INDEPENDENT VEHICLE SUSPENSION HAVING A SPRING-LINK SUSPENSION STRUCTURE MADE FROM A FIBROUS COMPOSITE MATERIAL
SUSPENSION DE ROUE INDIVIDUELLE D'UN VÉHICULE COMPRENANT UNE STRUCTURE BRAS OSCILLANT-RESSORT RÉALISÉE EN MATÉRIAU COMPOSITE RENFORCÉ PAR DES FIBRES

(30) Priorität: 30.04.2013 DE 102013207910
(43) Veröffentlichungstag der Anmeldung: 09.03.2016
(73) Patentinhaber: Bayerische Motoren Werke Aktiengesellschaft, 80809 München (DE)
(72) Erfinder: SCHOLZ, Hubert, 81543 München (DE); SEETHALER, Ludwig, 85241 Hebertshausen (DE)
(86) Internationale Anmeldenummer: PCT/EP2014/054150
(87) Internationale Veröffentlichungsnummer: WO 2014/177306

(56) Entgegenhaltungen:
- EP-A2- 0 213 367
- WO-A1-2011/065376
- DE-A1- 10 216 244
- DE-A1-102009 002 939
- GB-A- 2 380 717
- JP-A- 2000 177 346
- US-A- 3 429 566
- US-A- 4 457 536

## Beschreibung

Die Erfindung betrifft eine Einzelradaufhängung eines Fahrzeugs mit einer in Faserverbundwerkstoff ausgeführten und in Fahrzeug-Längsrichtung betrachtet im wesentlichen U-förmig ausgebildeten Feder-Lenker-Struktur, deren oberer und unterer Schenkel endseitig am Fahrzeug-Aufbau oder einem mit diesem verbundenen Träger befestigt ist, wobei zumindest eine dieser Befestigungen keinen Drehfreiheitsgrad um eine in Fzg.-Längsrichtung verlaufende Achse besitzt, während eine Radnabe zur Befestigung eines Fahrzeugrads mit der Basis der U-förmigen Feder-Lenker-Struktur verbunden ist. Zum Stand der Technik wird neben der DE 10 2008 043 330 A1 auf die DE 102 16 244 A1 verwiesen.

Leichtbau gewinnt im Fahrzeugbau, insbesondere bei Personenkraftwagen, zunehmende Bedeutung und soll besonders stark ausgeprägt auch im Fahrwerksbereich dargestellt werden. In diesem Sinne können Radführungselemente in Faserverbundwerkstoff ausgeführt werden und damit neben einer radführenden Funktion, die bislang von sog. radführenden Lenkern übernommen wird, auch die Funktion einer bislang zumeist als Schraubenfeder ausgeführten Tragfeder übernehmen, über die der Fzg.-Aufbau anteilig auf dem jeweiligen durch das Radführungselement geführten Rad abgestützt ist. Die beiden eingangs genannten Schriften zeigen Beispiele für solche Radführungselemente, welche vorliegend sowie im Oberbegriff des Patentanspruchs 1 als Feder-Lenker-Struktur bezeichnet werden.

Hiermit soll nun ausgehend von der genannten DE 102 16 244 A1 eine funktional vorteilhafte Einzelradaufhängung nach dem Oberbegriff des Anspruchs 1 aufgezeigt werden, die sich durch geringen Bauraumbedarf auszeichnet (= Aufgabe der vorliegenden Erfindung).
Die Lösung dieser Aufgabe ist dadurch gekennzeichnet, dass zumindest einer der Schenkel im wesentlichen, d.h. abgesehen von geringen Elastizitäten starr am Fahrzeug-Aufbau oder am genannten Träger befestigt ist und dass kein weiterer sich im wesentlichen in Fzg.-Längsrichtung erstreckender radführender Lenker vorgesehen ist, weshalb zur Erzielung einer gewünschten Vorspurzunahme beim Bremsen in zumindest einem der Schenkel eine sich ausgehend von der Befestigung der Radnabe an der Basis nur über einen Teilbereich des Schenkels in dessen Längsrichtung erstreckende Aussparung vorgesehen ist. Vorteilhafte Aus- und Weiterbildungen sind Inhalt der Unteransprüche.

Erfindungsgemäß ist abweichend vom genannten Stand der Technik kein radführender Längslenker oder dgl. vorgesehen, sondern es ist das jeweilige Fzg.-Rad ausschließlich durch die besagte aus einem Faserverbundwerkstoff bestehende und bei Betrachtung in Fzg.-Längsrichtung U-förmige Feder-Lenker-Struktur geführt, was selbstverständlich den Bauraumbedarf einer erfindungsgemäßen Einzelradaufhängung minimiert. Hierfür ist zumindest einer der Schenkel im wesentlichen starr letztlich am Fahrzeug-Aufbau (ggf. unter Zwischenschaltung eines besagten Trägers, welcher der Einfachheit halber im weiteren nicht mehr erwähnt wird) befestigt, so dass dieser Schenkel der Feder-Lenker-Struktur auch die Längsführung des Rades übernehmen kann, wobei idealerweise eine relativ bzw. möglichst breite Abstützbasis zwischen Schenkel und Fzg.-Aufbau vorgesehen sein sollte, worauf an späterer Stelle noch näher eingegangen wird.

Zunächst sei jedoch ein weiteres erfindungswesentliches Merkmal erläutert, welches insbesondere für einen Einsatz einer solchen Einzelradaufhängung an der Hinterachse eines zweispurigen Fahrzeugs vorgeschlagen wird, welche Achse bekanntlich solchermaßen ausgeführt sein sollte, dass das Rad beim Bremsen, d.h. unter Einwirkung einer Bremskraft zunehmend in Richtung Vorspur geht. Demnach ist in zumindest einem der Schenkel und vorzugsweise im oberen Schenkel eine sich ausgehend von der Basis nur über einen Teilbereich desselben in dessen Längsrichtung erstreckende Aussparung vorgesehen, wodurch ausgehend von einem im Bereich der Verbindung des besagten Schenkels mit dem Fahrzeug-Aufbau geschlossenen "Voll-Querschnitt" quasi zwei voneinander getrennte Lenker-Abschnitte gebildet sind, die sich bis zur Befestigungsstelle der Radnabe an der Basis der U-förmigen Feder-Lenker-Struktur erstrecken. In umgekehrter Betrachtungsrichtung führen somit ausgehend von der Befestigungsstelle der Radnabe an der erfindungsgemäßen Feder-Lenker-Struktur, an welcher Befestigungsstelle beispielsweise ein sog. Radträger gehalten sein kann, an dem die Radnabe geeignet gelagert ist, zwei voneinander getrennte Lenker-Abschnitte der Feder-Struktur in zumindest einem der Schenkel bis zu einer Stelle, an der diese beiden Lenkerabschnitte einander benachbart zu einem Vollquerschnitt ohne Aussparung bildenden Schenkel-Abschnitt zusammengeführt sind, der dann bis in die Befestigung dieses Schenkels am Fzg.-Aufbau fortgeführt ist.
Wenn nun der obere Schenkel einer erfindungsgemäßen Feder-Lenker-Struktur in dieser beschriebenen Weise ausgebildet ist, so entsteht unter Einwirkung einer am Rad wirkenden Bremskraft, die als Moment an der Feder-Lenker-Struktur abgestützt wird, ein Torsionsmoment (auch) auf diesen oberen Schenkel, welches im Bereich der besagten Aussparung dessen in Fahrtrichtung betrachtet vorderen Lenkerabschnitt nach unten innen verformt und dessen in Fahrtrichtung betrachtet hinteren Lenkerabschnitt nach oben außen verformt, was eine gewünschte Zunahme der Vorspur des von der Feder-Lenker-Struktur geführten Rades zur Folge hat.

Verstärkt werden kann der soeben beschriebene Effekt, indem beide Schenkel im wesentlichen, d.h. abgesehen von geringen Elastizitäten starr am Fahrzeug-Aufbau oder am genannten Träger befestigt sind und die besagte Aussparung in beiden Schenkeln über die Basis hinweg zusammenhängend ausgeführt ist.

Bereits kurz erwähnt wurde, dass die Befestigung des oder der "freien" Endes/Enden des/der Schenkel(s) am Fzg.-Aufbau eine relativ bzw. möglichst breite Abstützbasis bilden sollte, um eine gute Längsführung des Rades durch die vorgeschlagene Feder-Lenker-Struktur erzielen zu können. Als eine bevorzugte Ausführungsform wird vorgeschlagen, dass die im wesentlichen, d.h. abgesehen von geringen Elastizitäten starre Befestigung nach Art einer Nut- und Feder-Verbindung ausgeführt ist, mit einer im wesentlichen in Fzg.-Längsrichtung verlaufenden Nut in einem der miteinander zu verbindenden Elemente, in die eine geeignet mit dem anderen Element verbundene oder an diesem vorgesehene Verbindungsstruktur der Nut- und Feder-Verbindung unter Zwischenlage einer gummielastischen Schicht formschlüssig eingreift und dabei geeignet gehalten ist. Die zwischenliegende gummielastische Schicht dient nicht nur einer gewünschten akustischen Entkoppelung zwischen Rad und Fzg.-Aufbau, sondern ist auch anteilig für eine gewünschte Längsfederung, d.h. Federwirkung der Radaufhängung in Fzg.-Längsrichtung (bspw. im Hinblick auf Unebenheiten wie Querfugen oder dgl.) hilfreich.

Weiterhin wird fakultativ vorgeschlagen, dass zumindest einer der Schenkel bei Betrachtung in Fahrzeug-Längsrichtung an seiner der Fahrzeug-Front zugewandten Seite bzw. am vorderen Lenker-Abschnitt eine in Richtung der Fahrzeug-Hochachse gemessene geringere Dicke aufweist als an seiner dem Fahrzeug-Heck zugewandten Seite bzw. am hinteren Lenker-Abschnitt. Mit dieser Maßnahme geht das geführte Rad unter Einwirkung von Seitenkräften wie erwünscht verstärkt in Vorspur.

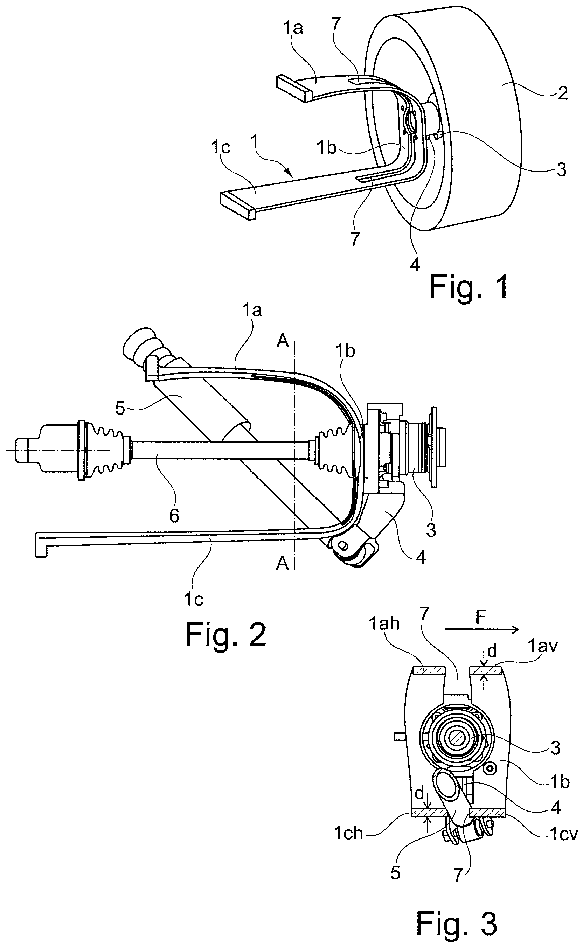

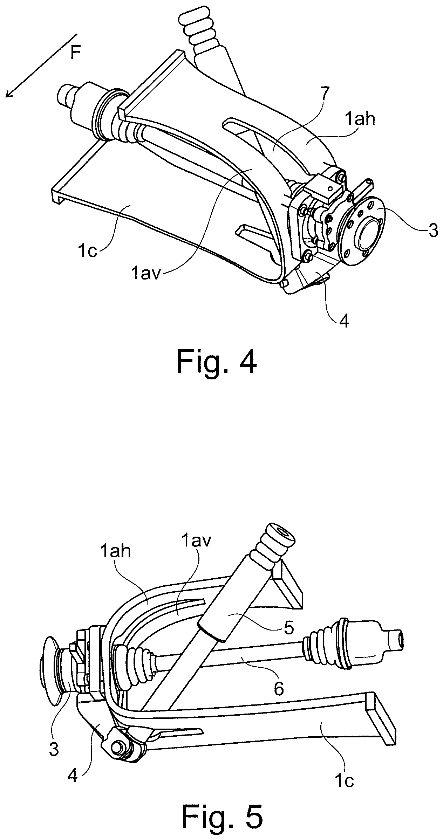

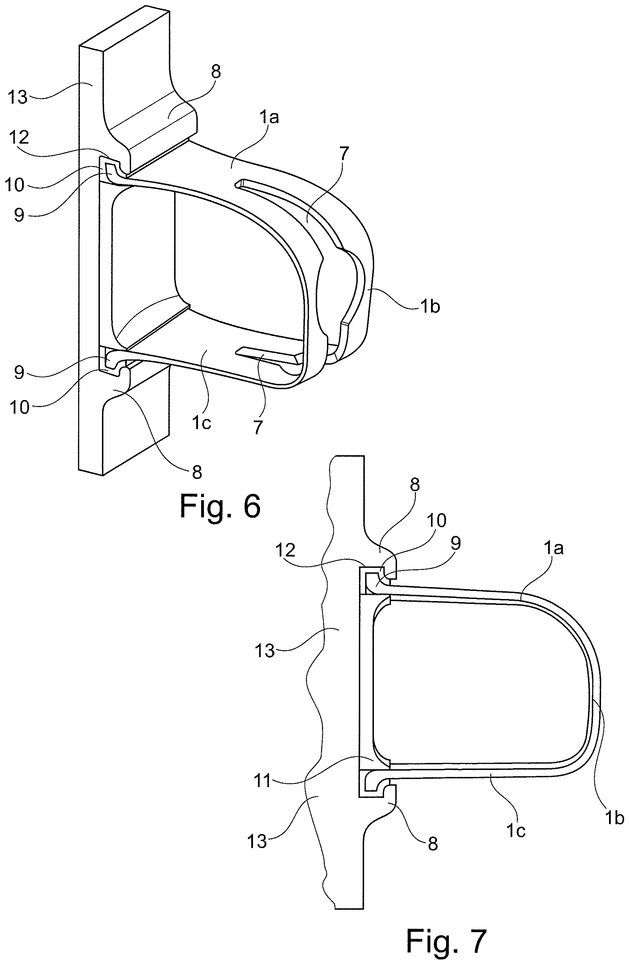

Im folgenden wird die Erfindung anhand eines Ausführungsbeispiels weiter erläutert, wobei die beigefügte **Figur 1** eine perspektivische Ansicht von vorne innen auf eine erfindungsgemäße Feder-Lenker-Struktur mit an einem Radträger mit Nabe angeflanschten linkem Hinter-Rad eines Personenkraftwagens (ohne Schwingungsdämpfer) zeigt, welche in **Figur 2** mit Schwingungsdämpfer aber ohne Rad in einer Ansicht gegen Fahrtrichtung dargestellt ist. **Figur 3** zeigt den Schnitt A-A aus Fig.2, während in den **Figuren 4, 5** weitere räumliche Ansichten dargestellt sind. Das in den Figuren 1 - 5 nicht gezeigte Detail der Befestigung der Enden der Schenkel der erfindungsgemäßen Feder-Lenker-Struktur am Fahrzeug-Aufbau ist in **Figur 6** (perspektivisch) bzw. **Fig.7** (in seitlicher Draufsicht - in Fzg.-Längsrichtung betrachtet) für eine sich hinsichtlich der Länge der Schenkel vom Ausführungsbeispiel nach den Figuren 1 - 5 unterscheidende andere (erfindungsgemäße) Feder-Lenker-Struktur dargestellt. In sämtlichen Figuren sind gleiche Elemente mit den gleichen Bezugsziffern gekennzeichnet.

So ist - zunächst auf die **Figuren 1** - **5** Bezug nehmend - mit der Bezugsziffer 1 eine erfindungsgemäße aus einem faserverstärkten - insbesondere glasfaserverstärkten - Kunststoff bestehende Feder-Lenker-Struktur gekennzeichnet, die im wesentlichen U-förmig geformt ist, mit zwei Schenkeln 1 a, 1 c sowie einer diese beiden Schenkel 1 a, 1 c miteinander verbindenden Basis 1b. Die in diesen Figuren freien Enden der Schenkel 1a, 1c sind auf an späterer Stelle anhand der Figuren 6, 7 erläuterte Weise am in den Figuren 1 - 5 nicht dargestellten Fahrzeug-Aufbau derart im wesentlichen starr befestigt, dass diese Feder-Lenker-Struktur 1 ein (nur in Fig.1 dargestelltes) Rad 2 des Fahrzeugs, welches an einer Nabe 3, die ihrerseits an einem (in Fig.1 nur vereinfacht dargestellten) Radträger 4 befestigt ist, welcher seinerseits an der Basis 1 b der Feder-Lenker-Struktur 1 befestigt ist, sowohl in Fzg.-Querrichtung, d.h. in Richtung der nicht dargestellten Drehachse des Rades 2 (sowie in Blickrichtung von Fig.3), als auch in Fzg.-Längsrichtung (= Blickrichtung von Fig.2) führen kann.

Zusätzlich führt die Feder-Lenker-Struktur 1 aufgrund ihrer im wesentlichen starren Befestigung am Fzg.-Aufbau das Rad auch in Richtung der Fahrzeug-Hochachse, wobei in dieser Richtung aufgrund der elastischen Verformbarkeit der Schenkel 1a, 1c ein durch Federkraft bzw. Federwirkung einer elastischen Schenkel-Verformung begrenzter Freiheitsgrad vorliegt. Indem bei diesem Ausführungsbeispiel - wie ersichtlich - der obere Schenkel 1 a in Fzg.-Querrichtung betrachtet kürzer als der untere Schenkel 1 c ausgeführt ist, stellt sich wie gewünscht über dem Radhub (in Vertikalrichtung) eine progressive Zunahme des negativen Rad-Sturzes ein. Parallel zur Federwirkung der Feder-Lenker-Struktur 1 wirkt ein Dämpfer 5, der einerseits am Radträger 4 befestigt und andererseits am nicht dargestellten Fzg.-Aufbau abgestützt ist. Neben den soweit dargestellten Bauelementen ist in diesen Figuren noch eine Antriebswelle 6 für das Rad 2 gezeigt.

Wie ersichtlich ist vorliegend in beiden Schenkeln 1 a, 1 c eine sich ausgehend von der Befestigung der Rad-Nabe 3 bzw. des Radträgers 4 an der Basis 1 b der Feder-Lenker-Struktur 1 nur über einen Teilbereich der Schenkel 1 a, 1 c in deren Längsrichtung erstreckende Aussparung 7 vorgesehen, die über die Basis 1 b hinweg bzw. durch die Basis 1 b hindurch zusammenhängend ausgeführt ist. Der technische Hintergrund für diese Aussparung 7 wurde vorhergehend ausführlich erläutert, nämlich dass hiermit in Ermangelung eines sich im wesentlichen in Fzg.-Längsrichtung erstreckenden radführender Lenkers am Rad 2 eine gewünschte Vorspurzunahme beim Bremsen des Fahrzeugs bzw. des Rades 2 erzielbar ist. Die in der besagten vorhergehenden Erläuterung genannten Lenker-Abschnitte der Schenkel 1 a, 1 c der Feder-Lenker-Struktur 1 sind in den **Figuren 3****,** **4, 5** für den oberen Schenkel 1 a mit dem zusätzlichen Buchstaben "v" für den vorderen Lenker-Abschnitt bzw. "h" für den hinteren Lenker-Abschnitt unter Berücksichtigung der in den **Figuren 3****,** **4** durch den Pfeil F dargestellten Fahrtrichtung des Fahrzeugs gekennzeichnet.

In **Fig.3** nicht erkennbar ist, dass beide Schenkel 1 a, 1 c an ihren in Fahrtrichtung F vorderen Lenker-Abschnitten 1av, 1cv eine in Richtung der Fahrzeug-Hochachse gemessene geringere Dicke d aufweisen bzw. aufweisen können als an ihren in Fahrtrichtung F hinteren Lenker-Abschnitten 1 ah, 1ch. Mit dieser Maßnahme der unterschiedlichen Dicke d geht das geführte Rad 2 unter Einwirkung von in Fzg.-Querrichtung am Rad angreifenden Seitenkräften wie grundsätzlich erwünscht verstärkt in Vorspur, da die vorderen Lenker-Abschnitte 1 av, 1 cv diesen Seitenkräften einen geringeren Widerstand entgegenzusetzen in der Lage sind als die hinteren Lenker-Abschnitte 1 ah, 1ch und sich daher unter Seitenkräften - wenn auch nur geringfügig - um ein geringes Maß stärker in Vertikalrichtung verformen als die hinteren Lenker-Abschnitte 1ah, 1ch.
Wie die **Figuren 6 und 7** zeigen ist die abgesehen von geringen Elastizitäten starre Befestigung der Feder-Lenker-Struktur 1 am Fahrzeug-Aufbau 13 nach Art einer Nut- und Feder-Verbindung ausgeführt, mit einer im wesentlichen in Fzg.-Längsrichtung (= Fahrtrichtung F) verlaufenden Nut 12 in einer am Fzg.-Aufbau 13 vorgesehenen und aufgrund der Nut 12 im Querschnitt L-förmig von einer vertikalen Wand (ebenfalls Bezugsziffer 13) des Fahrzeug-Aufbaus 13 abragenden Haltestruktur 8, in welche Nut 12 eine am freien Ende des jeweiligen Schenkels vorgesehene sog. Verbindungsstruktur 9 unter Zwischenlage einer gummielastischen Schicht 10 formschlüssig eingreift. Dabei sind die Verbindungsstrukturen 9 des oberen Schenkels 1a und des unteren Schenkels 1c nach Art einer bezüglich der U-förmigen Feder-Lenker-Struktur 1 nach außen gerichteten Krempe ausgeführt, so dass sich diese Feder-Lenker-Struktur 1 mit den beiden Verbindungsstrukturen 9 in der Ansicht von **Fig.7** quasi wie ein in einem Längsschnitt dargestellter Hut (mit einer "Hut-Krempe") zeigt. In **Fig.6** erkennt man weiterhin, dass die Aussparung 7 in der Basis 1 b kreisförmig und insbesondere breiter als in den Schenkeln 1a, 1c ausgeführt ist, um die Abtriebswelle 6 durch diese Aussparung 7 hindurch zur in dieser Figur nicht dargestellten Rad-Nabe 3 führen zu können.

## Patentansprüche

1. Einzelradaufhängung eines Fahrzeugs mit einer in Faserverbundwerkstoff ausgeführten und in Fahrzeug-Längsrichtung betrachtet im wesentlichen U-förmig ausgebildeten Feder-Lenker-Struktur (1), deren oberer und unter Schenkel (1a, 1c) endseitig am Fahrzeug-Aufbau oder einem mit diesem verbundenen Träger befestigt ist, wobei zumindest eine dieser Befestigungen keinen Drehfreiheitsgrad um eine in Fzg.-Längsrichtung verlaufende Achse besitzt, während eine Radnabe (3) zur Befestigung eines Fahrzeugrads (2) mit der Basis (1b) der U-förmigen Feder-Lenker-Struktur (1) verbunden ist,
**dadurch gekennzeichnet, dass** zumindest einer der Schenkel (1 a, 1 c) der Feder-Lenker-Struktur (1) im wesentlichen, d.h. abgesehen von geringen Elastizitäten starr am Fahrzeug-Aufbau oder am genannten Träger befestigt ist und dass kein weiterer sich im wesentlichen in Fzg.-Längsrichtung erstreckender radführender Lenker vorgesehen ist, weshalb zur Erzielung einer gewünschten Vorspurzunahme beim Bremsen in zumindest einem der Schenkel (1 a, 1 c) eine sich ausgehend von der Befestigung der Radnabe (3) an der Basis (1 b) nur über einen Teilbereich des Schenkels_(1a, 1c)_in dessen Längsrichtung erstreckende Aussparung (7) vorgesehen ist.

2. Einzelradaufhängung nach Anspruch 1, **dadurch gekennzeichnet, dass** die beiden Schenkel (1a, 1c) im wesentlichen, d.h. abgesehen von geringen Elastizitäten, starr am Fahrzeug-Aufbau oder am genannten Träger befestigt sind und dass die besagte Aussparung (7) in beiden Schenkeln (1a, 1c) über die Basis (1b) hinweg zusammenhängend ausgeführt ist.

3. Einzelradaufhängung nach Anspruch 1 oder 2, **dadurch gekennzeichnet, dass** zumindest einer der Schenkel (1 a, 1 c) bei Betrachtung in Fahrzeug-Längsrichtung an seinem der Fahrzeug-Front zugewandten Lenker-Abschnitt (1av, 1cv) eine in Richtung der Fahrzeug-Hochachse gemessene geringere Dicke (d) aufweist als an seinem dem Fahrzeug-Heck zugewandten Lenker-Abschnitt (1 ah, 1ch).

4. Einzelradaufhängung nach einem der vorangegangenen Ansprüche, **dadurch gekennzeichnet, dass** die im wesentlichen, d.h. abgesehen von geringen Elastizitäten, starre Befestigung der Feder-Lenker-Struktur (1) am Fahrzeug-Aufbau (13) nach Art einer Nut- und Feder-Verbindung ausgeführt ist, mit einer im wesentlichen in Fzg.-Längsrichtung verlaufenden Nut (12) in einem der miteinander zu verbindenden Elemente, in die eine geeignet mit dem anderen Element verbundene oder an diesem vorgesehene Verbindungsstruktur (9) der Nut- und Feder-Verbindung unter Zwischenlage einer gummielastischen Schicht formschlüssig (10) eingreift und dabei geeignet gehalten ist.

## Claims

1. An independent suspension of a vehicle having a spring-link structure (1) which is formed from fibre composite material and is configured to be substantially U-shaped seen in the longitudinal direction of the vehicle, and the upper and lower limb (1a, 1c) of which is fastened at the end to the vehicle body or to a support connected thereto, wherein at least one of these fastenings does not have any rotational degrees of freedom about an axis extending in the longitudinal direction of the vehicle, while a wheel hub (3) is connected to the base (1b) of the U-shaped spring-link structure (1) in order to attach a vehicle wheel (2),
**characterised in that** at least one of the limbs (1a, 1c) of the spring-link structure (1) is fastened substantially rigidly, i.e. apart from slight resiliences, to the vehicle body or to the mentioned support and **in that** a further wheel-guiding link, which substantially extends in the longitudinal direction of the vehicle, is not provided, which is why in order to achieve a desired increase in toe-in while braking, provided in at least one of the limbs (1a, 1c) is a recess (7) which extends from the fastening of the wheel hub (3) to the base (1b) only over a partial region of the limb (1a, 1c) in the longitudinal direction thereof.

2. An independent suspension according to claim 1, **characterised in that** the two limbs (1a, 1c) are fastened substantially rigidly, i.e. apart from slight resiliences, to the vehicle body or to the mentioned support and **in that** said recess (7) is configured to be continuous in both limbs (1a, 1c) across the base (1b).

3. An independent suspension according to claim 1 or claim 2, **characterised in that,** when viewed in the longitudinal direction of the vehicle, at least one of the limbs (1 a, 1 c) has a smaller thickness (d), measured in the direction of the vertical axis of the vehicle, on its link portion (1 av, 1 cv) facing the front of the vehicle than on its link portion (1 ah, 1ch) facing the rear of the vehicle.

4. An independent suspension according to any one of the preceding claims, **characterised in that** the fastening which is substantially rigid apart from small resiliences, of the spring-link structure (1) on the vehicle body (13) is configured in the manner of a tongue and groove connection, with a groove (12) running substantially in the longitudinal direction of the vehicle, in one of the elements to be connected together, into which groove a connecting structure (9) of the tongue and groove connection positively (10) engages, which connecting structure is suitably connected to the other element or is provided thereon, with the interposition of a flexible rubber layer and is thereby held in an appropriate manner.

## Revendications

1. Suspension de roue individuelle d'un véhicule ayant une structure à bras de suspension élastique (1) réalisée en un matériau composite renforcé par des fibres, et essentiellement en forme de U observée dans la direction longitudinale du véhicule, dont la branche supérieure et la branche inférieure (1a, 1c) sont fixées à leur extrémité à la carrosserie du véhicule ou à un élément porteur relié à celle-ci, au moins l'une de ces fixations ne possédant aucun degré de liberté de rotation autour d'un axe s'étendant dans la direction longitudinale du véhicule, et un moyeu de roue (3), permettant la fixation d'une roue (2) du véhicule étant relié à la base (1b) de la structure à bras de suspension élastique (1) en forme de U,
**caractérisée en ce qu'**
au moins l'une des branches (1a, 1c) de la structure de bras de suspension élastique (1) est fixée essentiellement rigidement à la carrosserie du véhicule ou à l'élément porteur, c'est-à-dire sans tenir compte de faibles élasticités, et il n'est prévu aucun autre bras de guidage de roue s'étendant essentiellement dans la direction longitudinale du véhicule, dans la mesure où, pour permettre d'obtenir une augmentation souhaitée du pincement des roues lors du freinage, il est prévu, dans au moins l'une des branches (1a, 1c) un évidement (7) s'étendant à partir de la fixation du moyeu de roue (3) sur la base (1b), uniquement sur une zone partielle de cette branche (1a, 1c), dans sa direction longitudinale.

2. Suspension de roue individuelle conforme à la revendication 1, **caractérisée en ce que**
les deux branches (1a, 1c) sont fixées essentiellement rigidement sur la carrosserie du véhicule ou sur l'élément porteur, c'est-à-dire sans tenir compte de quelques élasticités, et l'évidement (7) est réalisé de façon continue dans les deux branches (1a, 1c) en partant de la base (1b).

3. Suspension de roue individuelle conforme à la revendication 1 ou 2, **caractérisée en ce qu'**
au moins l'une des branches (1a, 1c) a, observée dans la direction longitudinale du véhicule, une épaisseur (d) mesurée en direction de l'axe vertical du véhicule plus faible sur son segment de bras (1av, 1cv) tourné vers l'avant du véhicule que sur son segment de bras (1ah, 1ch) tourné vers l'arrière du véhicule.

4. Suspension de roue individuelle conforme à l'une des revendications précédentes,
**caractérisée en ce que**
la fixation essentiellement rigide, c'est-à-dire sans tenir compte de faibles élasticités de la structure à bras de suspension élastique (1) sur la carrosserie (13) du véhicule est réalisée sous la forme d'une liaison à rainure et languette élastique comprenant une rainure (12) s'étendant essentiellement dans la direction longitudinale du véhicule située dans l'un des éléments à relier dans laquelle vient en prise par une liaison par la forme (10) une structure de liaison (9) de la liaison à rainure et languette élastique reliée de façon adaptée à l'autre élément ou prévue sur celui-ci avec interposition d'une couche ayant l'élasticité du caoutchouc, et y est retenue de manière adaptée.
